# EUROPÄISCHE PATENTSCHRIFT

(11) **EP 2 789 227 B1**
(45) Veröffentlichungstag und Bekanntmachung des Hinweises auf die Patenterteilung: **13.09.2017**
(21) Anmeldenummer: 14001318.6
(22) Anmeldetag: 10.04.2014
(51) Int. Cl.: A01K 51/00

(54) **Vorrichtung und Verfahren zur Bekämpfung von Varroa-Milben im Bienenstock**
System and method for controlling varroa mites in bee hives
Dispositif et procédé de lutte contre les varroas dans les ruches

(30) Priorität: 11.04.2013 DE 102013006265
(43) Veröffentlichungstag der Anmeldung: 15.10.2014
(73) Patentinhaber: Rossa, Richard, 77012 Sunnansjö (SE)
(72) Erfinder: Rossa, Richard, 77012 Sunnansjö (SE)
(74) Vertreter: Kistner, Thomas Alexander

(56) Entgegenhaltungen:
- WO-A2-2004/098276
- DD-A1- 230 752
- US-A1- 2008 064 298
- US-A1- 2012 202 403
- US-B2- 6 910 941

## Beschreibung

Die gegenwärtige Erfindung betrifft ein Verfahren und eine Vorrichtung zur Bekämpfung von Varroa-Milben in einem Bienenvolk in einem Bienenstock.

Die Varroa-Milbe ist ein parasitärer Bienen-Schädling, welcher sowohl auf adulten Bienen, wie auch in ungeschlüpften Brut-Zellen lebt. Adulte Bienen werden durch die Varroa-Milbe geschwächt, ungeborene Brut wird bei einem Varroa-Befall irreversibel geschädigt. Zur Bekämpfung der Varroa-Milbe sind chemische Verfahren bekannt. Dabei wird ein chemisches Mittel zur Bekämpfung der Varroa-Milbe in den Bienenstock eingeführt. Solche Verfahren können jedoch lediglich zu bestimmten Zeiten während des Jahres eingesetzt werden, da die chemischen Mittel nicht in den Honig gelangen dürfen. Da auch nach einer erfolgreichen Behandlung eine schnelle erneute Ausbreitung der Varroa-Milbe in dem Bienenstock geschieht, kann mit diesen Verfahren keine nachhaltige Beseitigung der Varroa-Milben erreicht werden.

Des Weiteren schädigt die Behandlung mit chemischen Mitteln die Bienen selbst. Die Volksstärke der Winterbienen ist bereits im Herbst merklich reduziert, der Totenfall während des Winters ist sehr hoch, die Anzahl der Winterbienen im Frühjahr ist niedrig und auch der schleppend erfolgende Volksaufbau einhergehend mit einem verminderten Honigeintrag sind signifikant. Darüber hinaus ist es häufig zu beobachten, dass bei einer Behandlung mit chemischen Mitteln die Königin "verloren geht".

Darüber hinaus sind thermische Verfahren bekannt, bei welchen eine Überhitzung der Varroa-Milben zu ihrer Bekämpfung eingesetzt wird. So zeigt beispielsweise die internationale Patentanmeldung WO 2012/108857 A1 ein Verfahren und eine Vorrichtung zur Bekämpfung von Varroa-Milben im Bienenstock. Dabei wird anstelle einer Wabe in eine Zarge eines Bienenstocks ein Heiz-Rahmen eingefügt. Der Heizrahmen wird bei geschlossenem Bienenstock betrieben. Dabei ist jedoch nachteilig, dass sich eine sehr inhomogene Temperaturverteilung in dem Bienenstock ergibt. Es ist notwendig, den Heiz-Rahmen derart zu heizen, dass nahe liegende Bienen geschädigt werden, um auch entfernt liegende Milben zuverlässig zu bekämpfen. Darüber hinaus ist es nötig, den Bienenstock zu öffnen und zumindest eine Wabe zu entnehmen, um den Heiz-Rahmen einzuführen. Dies setzt die Bienen einem zusätzlichen großen Stress aus.

Das Gerät ist nicht in der Lage andere als im Heizrahmen lokalisierte Parasiten zu bekämpfen. Weder auf adulten Bienen ansitzende Varroen noch im Brutnest bereits befindliche Varroenbrut. Die darüber hinaus im Bienenstock wandernden Varroen bleiben ebenfalls unbehelligt. Dabei erzeugt die Elektrizität erzeugt genügend Hitze, um sowohl die Drohnenpuppen als auch die Milben zu töten. Das Gerät soll bestimmungsgemäß mehrfach im Jahr eingesetzt werden. Es wird somit die gesamte Drohnenpopulation eines Bienenvolks vernichtet, da der Heizrahmen ein Drohnenrahmen ist. Werden dem Volk die Drohnen entzogen, so wird das benötigte Gleichgewicht im Volk empfindlich gestört, es entsteht ein Mangel an Begattungsvarianz, die genetische Vielfalt schwindet.

Das US Patent US 5,069,651 B1 zeigt eine Vorrichtung zur Bekämpfung von Varroa-Milben in Bienenstöcken. Die Vorrichtung beinhaltet dabei ein Gehäuse, welches an Stelle eines Deckels auf den Bienenstock aufgesetzt wird. Verbunden mit dem Gehäuse ist ein Schlauch, welcher mit dem Flugloch des Bienenstocks verbunden ist. Das Gehäuse beinhaltet eine Heizeinrichtung zum Beheizen von Luft und ein Gebläse zur Umwälzung von Luft. Das Gebläse sorgt für einen Luftstrom aus dem Bienenstock zur Heizeinrichtung durch den Schlauch in das Flugloch des Bienenstocks. Das dort gezeigte System ist jedoch wenig energieeffizient und tötet die Varroa-Milben nicht zuverlässig.

Das Dokument WO 2004/098276 A2 zeigt ein System zur Beheizung von Bienenstöcken zur Bekämpfung von Milben in den Bienenstöcken. Zur Beheizung wird dabei durch das Flugloch des Bienenstocks eine Düse einer Heizeinrichtung in den Bienenstock eingeführt. Die eigentliche Heizeinrichtung - ein Heizgebläse - verbleibt dabei außerhalb des Bienenstocks. Dies ist nachteilig, da so keine homogene Beheizung des gesamten Volks möglich ist.

Der gegenwärtigen Erfindung liegt die Aufgabe zugrunde, eine Vorrichtung und ein Verfahren zu schaffen, welche eine bienenverträgliche und rückstandsfreie Bekämpfung der Varroa-Milbe zu einem beliebigen Zeitpunkt ermöglichen.

Die Aufgabe wird erfindungsgemäß für die Vorrichtung durch die Merkmale des unabhängigen Anspruchs 1, für die Anlage durch die Merkmale des Anspruchs 10, für das System durch die Merkmale des Anspruchs 13 und für das Verfahren durch die Merkmale des unabhängigen Anspruchs 14 gelöst.

Vorteilhafte Weiterbildungen sind Gegenstand der hierauf rückbezogenen Unteransprüche.

Eine erfindungsgemäße Vorrichtung zur Bekämpfung von Varroa-Milben in einem Bienenvolk in einem Bienenstock, beinhaltet ein Gehäuse mit einer Heizeinrichtung zur Beheizung des Bienenstocks, einer Sensoreinrichtung mit einem Temperatursensor zur Erfassung einer Temperatur innerhalb des Bienenstocks und einer Regeleinrichtung zur Regelung der Beheizung basierend auf der erfassten Temperatur. Die Heizeinrichtung ist dabei ausgebildet, um geregelt durch die Regeleinrichtung eine Atmosphäre innerhalb des Bienenstocks derart zu beheizen, dass das Bienenvolk innerhalb des Bienenstocks homogen eine Temperatur von 40°C - 42°C erreicht. Das Gehäuse ist ausgebildet, um durch ein Flugloch des Bienenstocks zumindest teilweise in den Bienenstock eingesetzt zu werden. Das Gehäuse weist dabei einen Rahmen auf, welcher ausgebildet ist, um in das Flugloch des Bienenstocks eingesetzt zu werden. Die Heizeinrichtung ist dabei eine innerhalb des Rahmens angeordnete Heizplatte, welche parallel zu einem Boden des Bienenstocks innerhalb des Rahmens angeordnet ist. So kann eine besonders bienenschonende, einfache und energiesparende Bekämpfung der Milbe erreicht werden.

Vorzugsweise beinhaltet der Rahmen ein Gitter, welches zwischen einer untersten Zarge des Bienenstocks und der Heizplatte angeordnet ist. Das Gitter weist dabei einen Gitterabstand auf, welcher Varroa-Milben hindurchtreten lässt, und Bienen an einem Hindurchtreten hindert. Das Gitter ist dabei mit einem derart großen Abstand zu der Heizplatte angebracht, dass auf dem Gitter befindliche Bienen die Heizplatte nicht berühren können. So kann sichergestellt werden, dass die Bienen in dem Bienenstock während der Bekämpfung der Varroa-Milben nicht zu Schaden kommen.

Vorzugsweise beinhaltet der Rahmen eine Elektrode zum Abtöten von Varroa-Milben, welche die Elektrode berühren. Falls der Rahmen ein Gitter beinhaltet, ist dieses derart angeordnet, dass auf dem Gitter befindliche Bienen die Elektrode nicht berühren können. Durch die Elektrode können herabgefallene Varroa-Milben noch zuverlässiger abgetötet werden. Das Gitter verhindert dabei optional eine Schädigung der Bienen durch den durch die Elektrode gelieferten Stromschlag.

Bevorzugt weist die Vorrichtung einen Bodenkorpus auf, welcher unterhalb einer untersten Zarge des Bienenstocks angeordnet ist. Der Bodenkorpus weist eine Öffnung auf, welche an das Flugloch anschließt. Das Gehäuse ist dabei ausgebildet, um durch das Flugloch und gleichzeitig durch die Öffnung zumindest teilweise in den Bienenstock eingesetzt zu werden. So kann das Gehäuse einen größeren Querschnitt aufweisen als das Flugloch. Dies vereinfacht die Konstruktion und Herstellung der Vorrichtung.

Die Sensoreinrichtung weist bevorzugt einen Feuchtigkeitssensor zur Erfassung einer Feuchtigkeit der Atmosphäre innerhalb des Bienenstocks auf. Die Vorrichtung beinhaltet dann eine Klimatisierungseinrichtung, welche die Heizeinrichtung und eine Befeuchtungseinrichtung zur von der Regeleinrichtung geregelten homogenen Befeuchtung der Atmosphäre innerhalb des Bienenstocks auf 20 - 40%, bevorzugt von 15 - 30% relative Feuchtigkeit beinhaltet. So ist eine besonders bienenschonende Behandlung möglich.

Bevorzugt weist die Sensoreinrichtung weiterhin einen Sauerstoffsensor zur Erfassung der Sauerstoffkonzentration und/oder einen Kohlenstoffdioxidsensor zur Erfassung der Kohlenstoffdioxidkonzentration der Atmosphäre innerhalb des Bienenstocks auf. Die Vorrichtung beinhaltet dann eine Klimatisierungseinrichtung, welche die Heizeinrichtung und eine von der Regeleinrichtung geregelte Einrichtung zur homogenen Anpassung der Zusammensetzung der Atmosphäre innerhalb des Bienenstocks beinhaltet. So kann ein negativer Effekt auf die Bienen noch besser vermieden werden.

Die Vorrichtung ist bevorzugt ausgebildet, um das Bienenvolk innerhalb des Bienenstocks während einer Dauer von zumindest 10 Minuten, bevorzugt zumindest 20 Minuten, besonders bevorzugt zumindest 60 Minuten zu heizen und/oder zu befeuchten und/oder um während dieser Dauer die Zusammensetzung der Atmosphäre zu regeln. Alternativ ist die Vorrichtung ausgebildet, um die Dauer in Abhängigkeit von Messergebnissen der Sensoreinrichtung zu bestimmen. So kann eine optimale Behandlungsdauer sichergestellt werden.

Bevorzugt ist die Vorrichtung ausgebildet, um das gesamte Bienenvolk gleichzeitig zu behandeln. Das Bienenvolk beinhaltet adulte Bienen oder adulte Bienen und Brut. So ist ein Eingriff in das Volk, was einen großen Stress bei den Bienen auslösen würde nicht nötig.

Die Vorrichtung weist bevorzugt eine Aktoreneinrichtung auf, welche die Heizeinrichtung beinhaltet. Die Aktoreneinrichtung beinhaltet die Klimatisierungseinrichtung, falls die Vorrichtung eine Klimatisierungseinrichtung beinhaltet. Die Aktoreneinrichtung beinhaltet bevorzugt eine Medikamentierungseinrichtung zum Einführen von Medikamenten in den Bienenstock und/oder eine Fütterungseinrichtung zum Einführen von Futtermitteln in den Bienenstock und/oder eine Öffnungseinrichtung zum Öffnen und/oder Schließen und/oder Verengen und/oder Erweitern von Öffnungen des Bienenstocks. So können zahlreiche weitere Aktionen gesteuert werden. Insbesondere dienen diese weiteren Aktionen einer Verbesserung der Effektivität der Behandlung.

Die Sensoreinrichtung weist dabei bevorzugt zumindest eine Kamera auf, welche das Innere des Bienenstocks und/oder die Umgebung des Bienenstocks aufnimmt. Bevorzugt weist sie zumindest ein Mikrofon auf, welches das Innere des Bienenstocks und/oder die Umgebung des Bienenstocks aufnimmt. Bevorzugt weist sie einen Gewichtssensor auf, welcher das Gewicht des Bienenstocks oder zumindest das Gewicht einer Zarge misst. Bevorzugt weist sie weiterhin einen Vibrationssensor auf, welcher Vibrationen des Bienenstocks misst. Die Sensoreinrichtung beinhaltet vorzugsweise weiterhin einen Beschleunigungssensor, welcher Beschleunigungen des Bienenstocks misst. Bevorzugt weist sie weiterhin einen Öffnungssensor auf, welcher ein Öffnen des Bienenstocks bestimmt. So können verschiedene Parameter aufgenommen werden, welche anzeigen, ob eine Behandlung notwendig ist. Darüber hinaus lässt sich mit diesen Parametern der Erfolg der Behandlung kontrollieren.

Vorzugsweise weist die Vorrichtung dabei Steckplätze für Module auf. Ein Modul beinhaltet dabei zumindest einen Sensor und/oder zumindest einen Aktor. Die Steckplätze sind ausgebildet, um die Module mit Energie versorgen und/oder eine Kommunikation mit den Modulen und/oder zwischen den Modulen zu ermöglichen, und/oder um Sensoren und/oder Aktoren der Module Zugang zu einem Inneren des Bienenstocks zu ermöglichen. Die Vorrichtung beinhaltet dabei zumindest ein Modul. So kann die Vorrichtung je nach Einsatzzeitpunkt und Einsatzzweck modular aufgebaut werden. Eine Reduktion der Grund-Herstellungskosten wird so erreicht.

Eine erfindungsgemäße Anlage weist eine zuvor beschriebene erfindungsgemäße Vorrichtung und eine Steuereinrichtung zur Steuerung der Heizeinrichtung, der Regeleinrichtung und der Sensoreinrichtung auf. Die Steuereinrichtung ist dann ausgebildet, um eine Klimatisierungseinrichtung zu steuern, falls die Vorrichtung eine Klimatisierungseinrichtung beinhaltet. Sie ist dann ausgebildet, um eine Befeuchtungseinrichtung zu steuern, falls die Vorrichtung eine Befeuchtungseinrichtung beinhaltet. Sie ist dann weiterhin ausgebildet, um eine Einrichtung zur homogenen Anpassung der Zusammensetzung der Atmosphäre zu steuern, falls die Vorrichtung eine Einrichtung zur homogenen Anpassung der Zusammensetzung der Atmosphäre beinhaltet. Die Steuereinrichtung ist dann weiterhin ausgebildet, um eine Aktoreneinrichtung zu steuern, falls die Vorrichtung eine Aktoreneinrichtung beinhaltet. Die Steuereinrichtung ist dann ausgebildet, um Messergebnisse von der Sensoreinrichtung zu empfangen und zu verarbeiten. Die Anlage weist bevorzugt eine Kommunikationseinrichtung auf, welche ausgebildet ist, um verarbeitete Messergebnisse von der Steuereinrichtung zu empfangen und auszusenden. Weiterhin ist sie ausgebildet, um Steuersignale zu empfangen und an die Steuereinrichtung zu übergeben. So können die Funktionen der Vorrichtung von einer zentralen Stelle gesteuert werden. Darüber hinaus ermöglicht die Anlage eine Fernsteuerung mittels der Kommunikationseinrichtung.

Die Steuereinrichtung ist bevorzugt ausgebildet, um Alarmzustände basierend auf Messergebnissen der Sensoreinrichtung zu bestimmen und um ermittelte Alarmzustände an die Kommunikationseinrichtung zu übergeben. Die Kommunikationseinrichtung ist dann ausgebildet, um die übergebenen Alarmzustände auszusenden. So kann ein Imker auf eine häufige persönliche Kontrolle des Bienenstocks verzichten, da er bei alarmwürdigen Situationen automatisch gewarnt wird. Insbesondere lassen sich so Probleme bei der Behandlung frühzeitig erkennen.

Bevorzugt weist die Anlage zumindest zwei oben beschriebene Vorrichtungen auf. Die Steuereinrichtung und die Kommunikationseinrichtung sind dann in einem von dem Gehäuse der Vorrichtungen unterschiedlichen Gehäuse angeordnet. So wird erreicht, dass die Vorrichtungen räumlich nicht direkt bei der Steuereinrichtung sein müssen.

Ein erfindungsgemäßes System beinhaltet eine oben beschriebene Anlage und eine Kommunikationseinheit. Diese ist ausgebildet, um mit der Kommunikationseinrichtung zu kommunizieren, ausgesendete verarbeitete Messergebnisse von der Steuereinrichtung zu empfangen und anzuzeigen, und um Steuereingaben eines Nutzers als Steuersignale an die Kommunikationseinrichtung zu senden. Die Kommunikationseinheit ist bevorzugt ein Mobiltelefon oder ein Computer oder ein Laptop oder ein Tablet-Computer. So kann der Imker sehr einfach aus großer Entfernung den Zustand seiner Bienen überwachen und gegebenenfalls eine Behandlung auslösen.

Bevorzugt weist das System zumindest zwei oben beschriebene Anlagen auf. Die Kommunikationseinheit ist dann ausgebildet, um mit den Kommunikationseinrichtungen zu kommunizieren, ausgesendete verarbeitete Messergebnisse von den Steuereinrichtungen zu empfangen und anzuzeigen, und Steuereingaben eines Nutzers als Steuersignale an die Kommunikationseinrichtungen zu senden. So kann der Aufwand mehrerer Kommunikationseinheiten vermieden werden.

Ein erfindungsgemäßes Verfahren dient der Bekämpfung von Varroa-Milben in einem Bienenvolk in einem Bienenstock. Es beinhaltet eine Erfassung einer Temperatur innerhalb des Bienenstocks mittels einer Sensoreinrichtung und eine geregelte Beheizung des Bienenstocks basierend auf der erfassten Temperatur mittels einer Heizeinrichtung und einer Regeleinrichtung. Ein Gehäuse, welches die Sensoreinrichtung, die Heizeinrichtung und die Regeleinrichtung beinhaltet, wird dabei durch ein Flugloch zumindest teilweise in den Bienenstock eingesetzt. Eine Atmosphäre innerhalb des Bienenstocks wird dabei derart beheizt, dass das Bienenvolk innerhalb des Bienenstocks homogen eine Temperatur von 40°C - 42°C erreicht. So kann eine besonders bienenschonende Bekämpfung der Milbe erreicht werden.

Nachfolgend wird die Erfindung anhand der Zeichnungen, in welchen vorteilhafte Ausführungsbeispiele der Erfindung dargestellt sind, beispielhaft beschrieben. In den Zeichnungen zeigen:
- Fig. 1: einen exemplarischen Bienenstock;
- Fig. 2: ein erstes Ausführungsbeispiel der erfindungsgemäßen Vorrichtung;
- Fig. 3: ein zweites Ausführungsbeispiel der erfindungsgemäßen Vorrichtung;
- Fig. 4: ein drittes Ausführungsbeispiel der erfindungsgemäßen Vorrichtung;
- Fig. 5: eine Detailansicht eines vierten Ausführungsbeispiels der erfindungsgemäßen Vorrichtung;
- Fig. 6: eine Detailansicht eines fünften Ausführungsbeispiels der erfindungsgemäßen Vorrichtung;
- Fig. 7: ein Blockschaltbild eines sechsten Ausführungsbeispiels der erfindungsgemäßen Vorrichtung;
- Fig. 8: ein Blockschaltbild eines siebten Ausführungsbeispiels der erfindungsgemäßen Vorrichtung;
- Fig. 9: ein Blockschaltbild eines Details eines achten Ausführungsbeispiels der erfindungsgemäßen Vorrichtung;
- Fig. 10: ein Blockschaltbild eines Details eines neunten Ausführungsbeispiels der erfindungsgemäßen Vorrichtung;
- Fig. 11: ein Blockschaltbild eines Details eines zehnten Ausführungsbeispiels der erfindungsgemäßen Vorrichtung, und
- Fig. 12: ein Ablaufdiagramm eines Ausführungsbeispiels des erfindungsgemäßen Verfahrens.

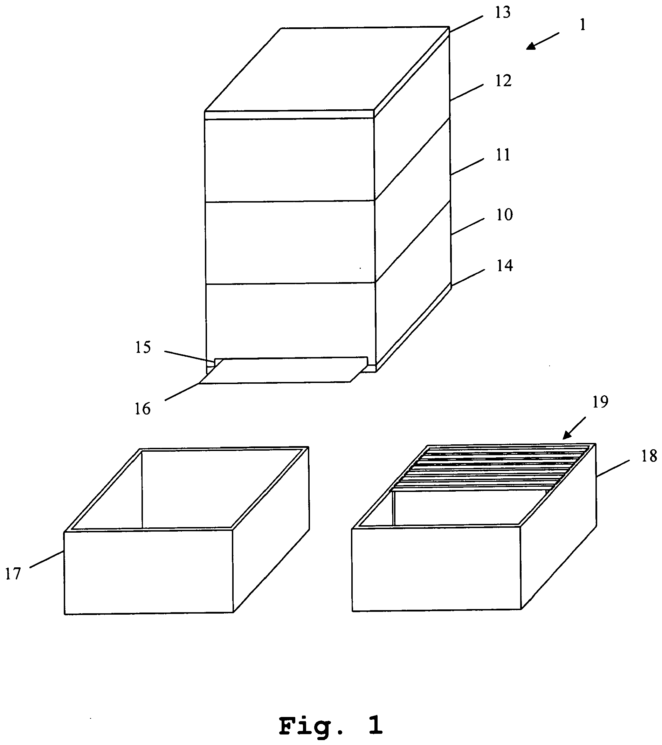

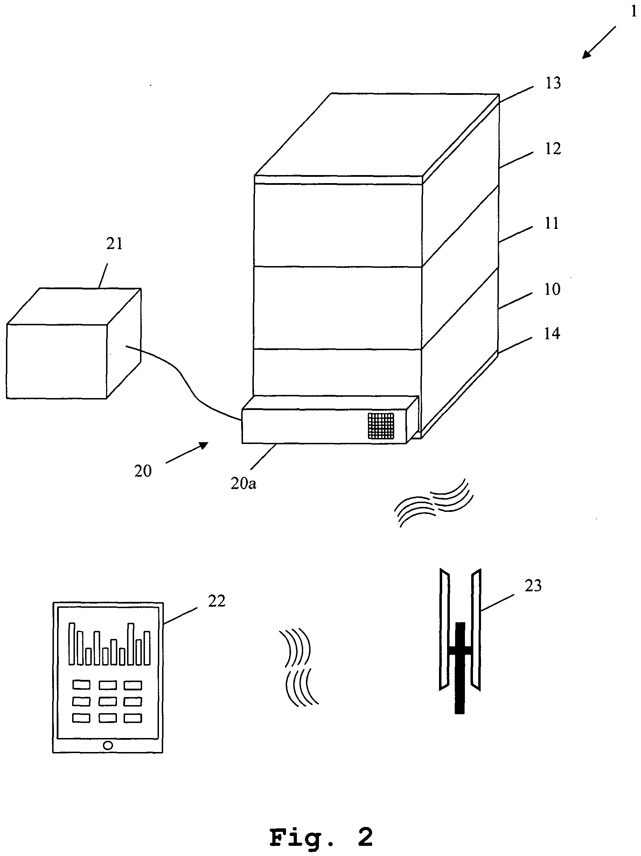

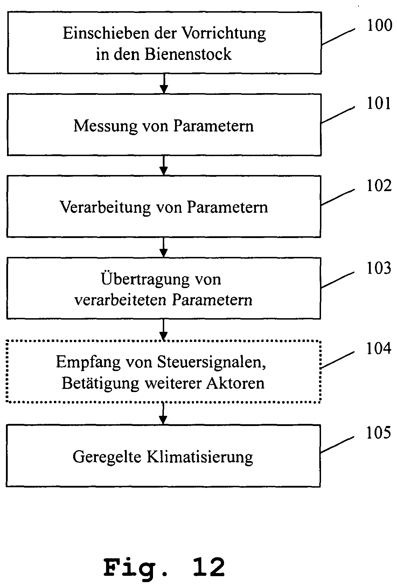

Zunächst wird anhand der Fig. 1 der Aufbau eines Bienenstocks erläutert. Dabei wird insbesondere auf Fachbegriffe im Imkerei-Umfeld eingegangen. Anschließend wird anhand von Fig. 2 - 11 auf unterschiedliche beispielhafte Ausführungsbeispiele der erfindungsgemäßen Vorrichtung eingegangen. Abschließend wird anhand von Fig. 12 die Funktionsweise eines Ausführungsbeispiels des erfindungsgemäßen Verfahrens erläutert. Identische Elemente wurden in ähnlichen Abbildungen zum Teil nicht wiederholt dargestellt und beschrieben.

In Fig. 1 ist ein exemplarischer Bienenstock 1 dargestellt. Der Bienenstock 1 besteht dabei aus mehreren Zargen 10, 11 und 12. Eine Zarge ist dabei ein Rahmen, üblicherweise aus Holzplatten, welcher nach unten und nach oben offen ist.

Der besseren Übersichtlichkeit halber sind zusätzlich Zargen 17, 18, welche nicht Teil des Bienenstocks 1 sind unterhalb dargestellt. Die Zarge 17 ist dabei nicht bestückt. Die Zarge 18 ist dabei mit Rahmen 19 bestückt, welche die Waben der Bienen tragen.

Unterhalb der untersten Zarge 10 des Bienenstocks ist dabei eine Bodenplatte 14 angeordnet. Oberhalb der obersten Zarge 12 ist dabei ein Deckel 13 angeordnet. In das Flugloch 15 einsetzt ist dabei ein Fluglochbrett 16. Das Fluglochbrett 16 wird dabei von dem Flugloch 15 und der Bodenplatte 14 gehalten. Zwischen dem Fluglochbrett 16 und der oberen Umfassung des Fluglochs 15 verbleibt dabei ein Spalt, welcher ausreichend breit ist, dass Bienen vom Inneren des Bienenstocks 1 auf das Fluglochbrett 16 gelangen können.

Das Bienenvolk befindet sich überwiegend im Bienenstock 1. Das Bienenvolk besteht dabei aus adulten Bienen und gegebenenfalls Brut, d.h. Bienenlarven in unverdeckelten und verdeckelten Zellen einzelner Rahmen. Die zu bekämpfenden Varroa-Milben haften dabei zum einen an den adulten Bienen und befinden sich zum anderen in den verdeckelten Brut-Zellen.

In Fig. 2 ist ein erstes Ausführungsbeispiel der erfindungsgemäßen Vorrichtung dargestellt. Die Vorrichtung 20 beinhaltet hier ein Gehäuse 20a. Dieses wird hier durch das Flugloch teilweise in die unterste Zarge 10 des Bienenstocks 1 eingeführt. Die Vorrichtung 20 verdeckt dabei das gesamte Flugloch, so dass keine Bienen entkommen können. Die Vorrichtung 20 ist bevorzugt ausgebildet, um unterschiedliche Größen von Fluglöchern dicht schließend abdecken zu können.

Die Vorrichtung 20 ist dabei mit einer Energieversorgung, hier einer Batterie 21 verbunden. Alternativ kann die Vorrichtung über einen Netzanschluss verfügen und über diesen mit Energie versorgt werden. Die Vorrichtung 20 ist weiterhin ausgebildet, um über ein Kommunikationsnetzwerk, z.B. ein GSM-Netzwerk, ein UMTS-Netzwerk, ein LTE-Netzwerk, ein Telefon-Netzwerk, ein WLAN-Netzwerk mit einer Kommunikationseinheit, z.B. hier einem Tablet-PC 22 zu kommunizieren. Das Kommunikationsnetzwerk ist hier durch eine Basisstation 23 symbolisiert.

Alternativ werden die Messergebnisse lediglich auf einem Server, z. B. im Internet abgelegt, sodass der Imker mit einem beliebigen Endgerät auf die Informationen zugreifen kann.

Die Vorrichtung 20 wird dabei von der Batterie 21 mit elektrischem Strom versorgt. Die Vorrichtung 20 ist ausgebildet, um das Innere des Bienenstocks 1 zu beheizen. Dabei wird ausgenutzt, dass Varroa-Milben eine geringere maximale Temperatur überstehen als adulte Bienen und Bienen-Brut. Die Temperatur beträgt bevorzugt 40-42°C. Die Vorrichtung 20 heizt somit das Innere des Bienenstocks und damit das Bienenvolk auf eine solche Temperatur auf, um die Varroa-Milben abzutöten, während das Bienenvolk möglichst unbeschadet bleibt. Darüber hinaus überwacht die Vorrichtung 20 die erreichte Temperatur und führt die Aufheizung des Bienenstocks 1 geregelt durch. Weiterhin sind zusätzliche Funktionen der Vorrichtung 20 wie z.B. eine Feuchtigkeitssteuerung und eine Gaszusammensetzungssteuerung möglich. Hierauf wird anhand der folgenden Figuren eingegangen.

Neben einer Energieversorgung durch eine Batterie und einen Netzanschluss ist ebenso eine dezentrale Energieversorgung durch Energie-Ernten (energy harvesting) aus vorhandener Wärme, vorhandener Vibrationen oder vorhandener Luftströmungen möglich. Alternativ kann die Energie photovoltaisch erzeugt werden. Bei diesen Verfahren zur Energiegewinnung kann zusätzlich eine Zwischenspeicherung in einem Akkumulator erfolgen.

Die Vorrichtung 20, die Batterie 21 und die Kommunikationseinheit 22 bilden dabei ein System.

Auf den detaillierten Aufbau und die detaillierte Funktionsweise der Vorrichtung 20 und des Systems wird anhand der folgenden Figuren eingegangen.

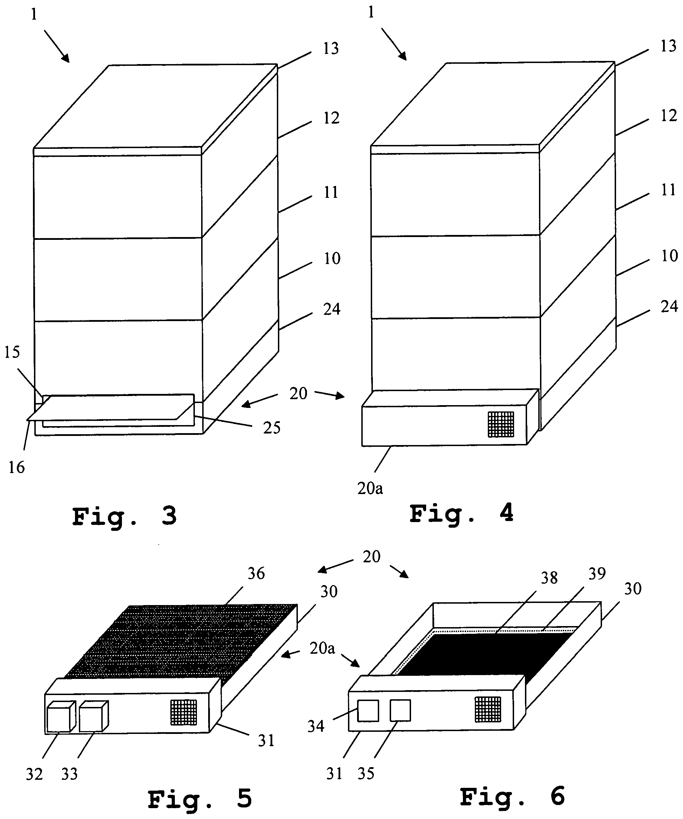

In Fig. 3 ist ein zweites Ausführungsbeispiel der erfindungsgemäßen Vorrichtung 20 gezeigt. Die Vorrichtung 20 beinhaltet hier zusätzlich einen Bodenkorpus 24, welcher an Stelle der Bodenplatte 14 aus Fig. 1 und Fig. 2 unter der untersten Zarge 10 des Bienenstocks 1 angeordnet ist. Der Bodenkorpus 24 ist dabei aufgebaut wie eine Zarge, beinhaltet jedoch keine Rahmen mit Waben und ist nach unten hin abgeschlossen. Der Bodenkorpus 24 weist darüber hinaus eine Öffnung 25 auf, welche direkt unterhalb des Fluglochs 15 angeordnet ist und das Flugloch 15 nach unten vergrößert.

Die Öffnung 25 dient dabei neben dem Flugloch 15 zur Aufnahme des Gehäuses 20a. In Fig. 3 ist ein Zustand des Bienenstocks 1 im herkömmlichen Betrieb, also ohne eingesetztes Gehäuse 20a dargestellt. In diesem Fall ist die Öffnung 25 durch einen Deckel verschlossen. Der Deckel dient dabei zusätzlich als Halterung für das Fluglochbrett 16.

In Fig. 4 ist ein drittes Ausführungsbeispiel der erfindungsgemäßen Vorrichtung 20 gezeigt. Die Darstellung in Fig. 4 entspricht der Darstellung in Fig. 3 bei eingesetztem Gehäuse 20a. Deutlich erkennbar ist hier, dass das Gehäuse 20a das gesamte Flugloch 15 und die gesamte Öffnung 25 des Bodenkorpus 24 verdeckt und dicht abschließt.

In Fig. 5 ist ein viertes Ausführungsbeispiel der erfindungsgemäßen Vorrichtung 20 gezeigt. Das Gehäuse 20a beinhaltet dabei einen Rahmen 30, und ein Gehäuse-Element 31. Der Rahmen 30 ist dabei ausgebildet, um vollständig in das Flugloch 15 und die Öffnung 25 aus Fig. 3 eingeschoben zu werden. Das Gehäuse-Element 31 ist dabei ausgebildet, um außerhalb des Bienenstocks zu verbleiben und das Flugloch 15 und die Öffnung 25 bündig zu verschließen. Der Rahmen 30 ist dabei nach oben in Richtung der untersten Zarge 10 des Bienenstocks 1 mit einem Gitter 36 abgeschlossen. Das Gitter 36 weist dabei einen derartigen Gitterabstand auf, dass keine Bienen hindurchtreten können. Gleichzeitig ist der Gitterabstand jedoch so groß, dass die zu bekämpfenden Varroa-Milben hindurchtreten können. Anstatt eines Gitters 36 kann auch eine gelochte Platte oder ein Netz oder eine ähnliche Vorrichtung eingesetzt werden. Vorzugsweise beträgt der Gitterabstand des Gitters 36 bzw. der Lochdurchmesser einer alternativen Lochplatte zumindest 2mm, höchstens 5mm. Besonders bevorzugt beträgt er 3mm. In Fig. 5 sind aufgrund des Gitters 36 darunter in dem Rahmen 30 angeordnete Komponenten nicht dargestellt. Diese sind in Fig. 6 gezeigt.

An dem Gehäuse-Element 31 sind weiterhin Module 32, 33 angebracht. Die Module 32, 33 können dabei weitere Sensoren und/oder Aktoren beinhalten. Die Module können dabei flexibel mit dem Gehäuse-Element 31 verbunden werden. Hierzu weist das Gehäuse-Element 31 Steckplätze 34, 35 auf, welche zur Aufnahme der Module vorgesehen sind. Bei den Modulen 32, 33 kann es sich beispielsweise um eine Befeuchtungseinrichtung oder einen Geräusch-Sensor handeln. Sämtliche anhand der weiteren Ausführungsbeispiele beschriebenen Sensoren und/oder Aktoren können als Modul vorgesehen sein.

In Fig. 6 ist ein fünftes Ausführungsbeispiel der erfindungsgemäßen Vorrichtung 20 gezeigt. Wie bereits anhand von Fig. 5 beschrieben, beinhaltet das Gehäuse 20a der Vorrichtung 20 einen Rahmen 30 und ein Gehäuse-Element 31. Auf die Darstellung des Gitters 36 aus Fig. 5 ist hier der Übersichtlichkeit halber verzichtet worden. Deutlich erkennbar sind hier Steckplätze 34, 35 für Module 32, 33 aus Fig. 5. Die Steckplätze 34, 35 stellen dabei jeweils eine Schnittstelle für ein Modul 32, 33 zur Verfügung. Über diese Schnittstelle kann eine Kommunikation wie auch eine Energieversorgung erfolgen. Darüber hinaus sind die Steckplätze 34, 35 vorzugsweise so ausgebildet, dass ein evtl. in dem jeweiligen Modul 32, 33 angeordneter Sensor und/oder Aktor durch das Gehäuse 31 hindurch ins Innere des Rahmens 30 ragen kann, um dort eine Messung durchzuführen, oder eine Tätigkeit zu vollführen.

In dem Gehäuse-Element 31 ist dabei zumindest eine Steuereinrichtung angeordnet, um weitere Sensoren und/oder Aktoren, welche optional über Module 32, 33 eingesetzt sind, zu steuern.

In Fig. 6 ist weiterhin unterhalb des hier nicht dargestellten Gitters 36 deutlich erkennbar, eine Heizplatte 38 angeordnet. Die Heizplatte 38 bedeckt dabei den überwiegenden Teil der Bodenfläche des Rahmens 30. Die Heizplatte 38 ist dabei mit dem Gehäuse-Element 31 verbunden und wird von innerhalb des Gehäuse-Elements 31 vorgehaltenen Komponenten mit Energie versorgt. Die Heizplatte 38 vollführt dabei das Beheizen des Bienenstocks 1, um die Varroa-Milben zu bekämpfen. Vorzugsweise wird die Heizplatte 38 dabei auf eine Temperatur von 40-60°C, besonders bevorzugt von 45-55°C erhitzt. Durch natürliche Konvektion oder unterstützt durch einen Ventilator innerhalb des Gehäuse-Elements 31, wird die Luft im Inneren des Bienenstocks 1 somit erwärmt. Die Erwärmung der Luft erfolgt dabei geregelt durch die Steuereinrichtung im Gehäuse 31. Von der hohen Temperatur betroffene Varroa-Milben versuchen zu fliehen und lassen somit von befallenen Bienen ab, bzw. verlassen befallende Brutzellen. Diese Varroa-Milben fallen durch den Bienenstock 1 herab und landen zum größten Teil auf der Heizplatte 38. Durch die erhöhte Temperatur auf der Heizplatte 38 verenden die Varroa-Milben dort. Dies ist vorteilhaft, da bei üblichen Systemen zur thermischen Varroa-Bekämpfung geflohene Varroa-Milben nach einem Abschalten der Heizung erneut zu den Bienen bzw. zu der Brut zurückkehren.

Zur weiteren Erhöhung der Wirksamkeit der Vorrichtung, ist hier zusätzlich eine Elektrode 39 zwischen dem Rahmen 30 und der Heizplatte 38 verlegt. Die Elektrode 39 dient dabei einem gezielten Abtöten von Varroa-Milben, welche außerhalb der Heizplatte 38 landen. Dies erfolgt durch einen Stromschlag. Alternativ zu einer hier dargestellten zwischen dem Rahmen 30 und der Heizplatte 38 angeordneten Elektrode 39 ist auch eine Gitterelektrode denkbar, welche oberhalb der Heizplatte 38 aber unterhalb des Gitters 36 angeordnet ist und die gesamte Fläche innerhalb des Rahmens 30 abdeckt. Sämtliche herabfallende Varroa-Milben landen somit auf dieser Gitterelektrode und werden dort gezielt durch einen Stromschlag getötet.

Eine entsprechende Gitterelektrode wie auch die hier dargestellte Elektrode 39 sind dabei derart weit von dem Gitter 36 entfernt, dass keine Gefahr besteht, dass Bienen, insbesondere mit durch das Gitter 36 ragenden Extremitäten die jeweilige Elektrode berühren können.

Vorzugsweise ist weiterhin der Bodenkorpus 24 ausziehbar ausgebildet. D.h. die Abmessungen des Bodenkorpus 24 können durch Ausziehen oder Einschieben an ein Format der Zargen des Bienenstocks angepasst werden. Dabei kann entweder eine feste Größe der Öffnung 25 oder eine mittels Einsätzen oder Einschüben und Auszügen veränderbare Größe der Öffnung 25 genutzt werden. Somit ist auch eine Anpassung an unterschiedliche Fluglochgrößen möglich. In diesem Fall ist das Gehäuse 31 vorzugsweise ausgebildet, um den Rahmen 30 signifikant zu überlappen, so dass auch bei einem Einschub des Rahmens 30 in eine Öffnung 25 bzw. ein Flugloch 15, welche deutlich größer sind als der Rahmen 30 ein bündiges Schließen erreicht wird.

Vorzugsweise erfolgt eine automatische Abschaltung der Heizplatte, sobald eine Oberflächentemperatur größer 30°C erreicht ist.

Vorzugsweise weist die Vorrichtung weiterhin eine Luftumwälzeinrichtung mit einem Luftdurchsatz von mindestens 10 m³ pro Stunde bis maximal 190 m³ pro Stunde auf.

Vorzugsweise weist die Vorrichtung weiterhin einen Luftströmungssensor auf.

Eine Befeuchtung kann dabei durch einen Ultraschall-Zerstäuber erreicht werden.

Eine gezielte Luftentfeuchtung kann dabei mit einem Wärmetauscher erreicht werden.

Weiterhin kann ein Fluglochzugangssensor genutzt werden, welcher ein Betreten und ein Verlassen des Bienenstocks durch Bienen detektiert.

Weiterhin kann ein Honigreifesensor eingesetzt werden.

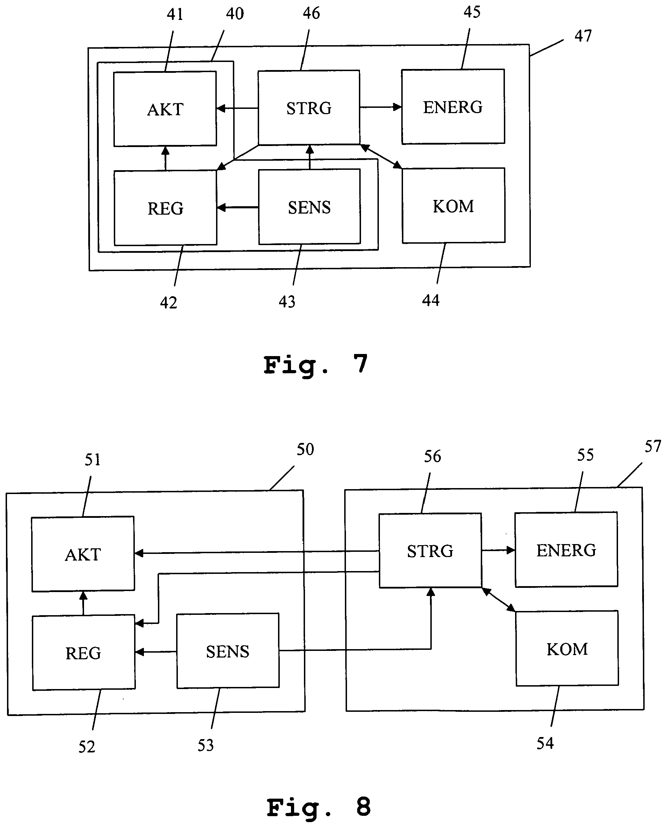

In Fig. 7 ist ein Blockschaltbild eines sechsten Ausführungsbeispiels der erfindungsgemäßen Vorrichtung gezeigt. Die Vorrichtung 40 beinhaltet dabei eine Aktoreneinrichtung 41, eine Regelungseinrichtung 42 und eine Sensoreinrichtung 43. Eine Kommunikationseinrichtung 44, eine Energieversorgungseinrichtung 45 und eine Steuerungseinrichtung 46 sind zusätzlich in einem gemeinsamen Gehäuse 47 angeordnet. Die Aktoreneinrichtung 41 ist dabei mit der Regelungseinrichtung 42 und der Steuerungseinrichtung 46 verbunden. Die Sensoreinrichtung 43 ist mit der Regelungseinrichtung 42 und der Steuerungseinrichtung 46 verbunden. Die Kommunikationseinrichtung 44 und die Energieversorgungseinrichtung 45 sind dabei mit der Steuerungseinrichtung 46 verbunden. Zusätzlich ist die Energieversorgungseinrichtung 45 mit sämtlichen weiteren hier dargestellten Komponenten verbunden. Diese Verbindungen wurden jedoch aufgrund der Übersichtlichkeit nicht gezeichnet.

Die Sensoreinrichtung 43 beinhaltet dabei zumindest einen Temperatursensor, welcher die Temperatur der Atmosphäre in dem Bienenstock misst. Messergebnisse der Sensoreinrichtung 43 werden an die Steuerungseinrichtung 46 und die Regelungseinrichtung 42 übertragen. Die Regelungseinrichtung 42 nutzt die Messergebnisse als Istwert für eine Regelung. Basierend hierauf erstellt die Regelungseinrichtung 42 Stellwerte, welche sie an die Aktoreneinrichtung 41 überträgt. Die Aktoreneinrichtung 41 beinhaltet dabei zumindest eine Heizeinrichtung, welche ausgebildet ist, um die Atmosphäre innerhalb des Bienenstocks aufzuheizen. Die Heizeinrichtung wird dabei von der Regelungseinrichtung 42 gesteuert. Die Kommunikationseinrichtung 44 ist dabei ausgebildet, um Messergebnisse der Sensoreinrichtung 43, welche von der Steuereinrichtung 46 verarbeitet wurden an eine Kommunikationseinheit, z.B. den Tablet-PC aus Fig. 2 auszusenden. Darüber hinaus ist die Kommunikationseinrichtung 44 ausgebildet, um Steuereingaben, welche ein Nutzer mittels der Kommunikationseinheit, z. B. dem Tablet-PC 22 getätigt hat und als Steuersignale ausgesendet wurden zu empfangen und an die Steuereinrichtung 46 zu übertragen. Die Steuereinrichtung 46 ist ausgebildet, um basierend auf diesen Steuersignalen alle weiteren Komponenten der Vorrichtung 40 zu steuern.

Die Energieversorgungseinrichtung 45 wird dabei ebenfalls von der Steuereinrichtung 46 gesteuert. Darüber hinaus versorgt sie sämtliche weitere Komponenten der Vorrichtung 40 mit Energie. Die Energieversorgungseinrichtung 45 ist dabei mit z.B. der Batterie 21 aus Fig. 2 verbunden.

In dem in Fig. 7 dargestellten Ausführungsbeispiel befinden sich sämtliche Komponenten der Vorrichtung 40 in einem gemeinsamen Gehäuse, welches wie in Fig. 2 dargestellt zumindest teilweise in das Flugloch 15 des Bienenstocks eingeführt wird.

In Fig. 8 ist ein alternatives siebtes Ausführungsbeispiel dargestellt. Hier ist die erfindungsgemäße Vorrichtung 50 alleine in ihrem Gehäuse angeordnet. Die Steuereinrichtung 56, die Energieversorgungseinrichtung 55 und die Kommunikationseinrichtung 54 sind dabei in einem getrennten Gehäuse 57 angeordnet. Lediglich die Vorrichtung 50 wird dabei in den Bienenstock eingeführt. Das Gehäuse 57 ist lediglich über eine Kabelverbindung mit der Vorrichtung 50 verbunden. Alternativ kann auch eine drahtlose Verbindung eingesetzt werden. In diesem Fall beinhaltet die Vorrichtung 50 eine zusätzliche Kommunikationseinrichtung, um mit einer hier ebenfalls nicht dargestellten Kommunikationseinrichtung in dem Gehäuse 57 drahtlos zu kommunizieren. Bei dem hier dargestellten Ausführungsbeispiel kann eine Steuereinheit 56 in dem Gehäuse 57 mehrere erfindungsgemäße Vorrichtungen 50 steuern. Hier ist jedoch lediglich eine Vorrichtung 50 dargestellt. Somit können alternativ auch beliebige Anzahlen von erfindungsgemäßen Vorrichtungen mit der Steuereinrichtung 56 in dem Gehäuse 57 verbunden sein.

Dies ist insbesondere vorteilhaft, wenn eine Mehrzahl von Bienenstöcken in räumlicher Nähe zueinander aufgestellt sind und jeder der Bienenstöcke gleichzeitig mit einer erfindungsgemäßen Vorrichtung ausgerüstet ist. In diesem Fall kann der zusätzliche Aufwand mehrerer unterschiedlicher Steuereinrichtungen, Energieversorgungseinrichtungen und Kommunikationseinrichtungen eingespart werden.

Die Steuereinrichtung 46 bzw. 56 ist weiterhin ausgebildet, um basierend auf den Messergebnissen der Sensoreinrichtung 43 bzw. 53 Alarmzustände festzustellen. So könnte die Steuereinrichtung 46, 56 beispielsweise basierend auf einer gemessenen hohen Beschleunigung des Bienenstocks auf einen unbefugten Zugriff z.B. durch ein Raubtier oder durch einen Dieb schließen und diesen Alarmzustand mittels der Kommunikationseinrichtung 44 bzw. 54 an die Kommunikationseinheit 22 des Imkers melden. Der Imker erfährt somit frühzeitig von Problemen mit dem Bienenstock und kann tätig werden. Es ist somit für den Imker nicht länger nötig, regelmäßig eine Kontrolle des Bienenstocks durchzuführen. Insbesondere können Alarme auf Probleme bei der Behandlung aufmerksam machen.

Die Vorrichtung 50 und der Inhalt des Gehäuses 57 bilden dabei eine Anlage.

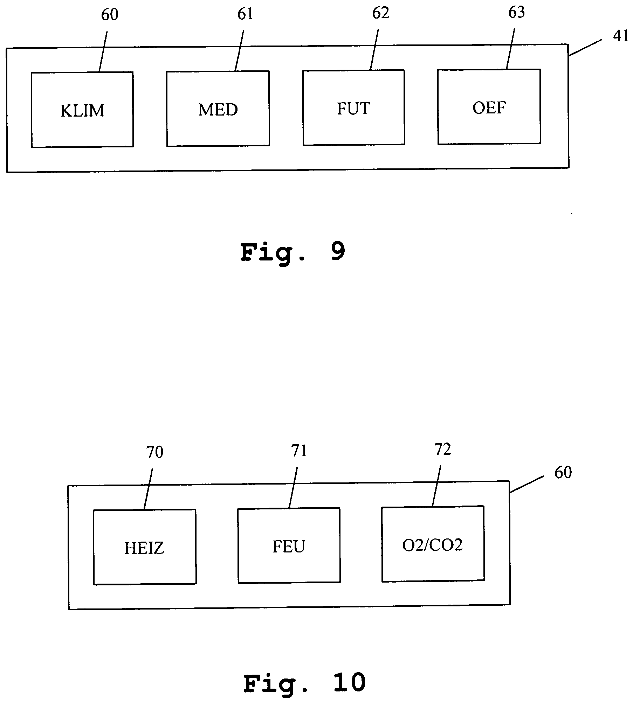

In Fig. 9 ist ein Detail eines fünften Ausführungsbeispiels der erfindungsgemäßen Vorrichtung gezeigt. Hier ist die Aktoreneinrichtung 41 im Detail dargestellt. Die Aktoreneinrichtung 41 beinhaltet hier eine Klimatisierungseinrichtung 60, eine Medikamentierungseinrichtung 61, eine Fütterungseinrichtung 62 und eine Öffnungseinrichtung 63 auf. Die Klimatisierungseinrichtung 60 beinhaltet die bereits beschriebene Heizeinrichtung, um den Bienenstock 1 zu beheizen. Die Medikamentierungseinrichtung 61 ist dabei ausgebildet, um feste, flüssige oder gasförmige Medikamente in den Bienenstock einzuführen. Die Fütterungseinrichtung 62 ist dabei ausgebildet, um Futtermittel in den Bienenstock einzuführen. Die Öffnungseinrichtung ist dabei ausgebildet, um Öffnungen des Bienenstocks zu öffnen oder zu schließen oder zu verengen oder zu erweitern. Dies ist insbesondere im Rahmen der Schwarmkontrolle nützlich, da mit einer Verengung des Fluglochs ein Verlassen einer schwarmbereiten Königin des Stocks verhindert werden kann. Auch ist dies nützlich, um bei einer geplanten Verlegung des Bienenstocks die Bienen innerhalb des Bienenstocks zu halten. Insbesondere können so die Bienen bei einer Behandlung im Stock gehalten werden.

Sämtliche Komponenten der Aktoreneinrichtung 41, die Klimatisierungseinrichtung 60, die Medikamentierungseinrichtung 61, die Fütterungseinrichtung 62 und die Öffnungseinrichtung 63 sind dabei mit der Steuereinrichtung 46 aus Fig. 7 verbunden und sind von dieser gesteuert. Diese Verbindungen wurden hier der Übersichtlichkeit halber weggelassen.

Alternativ kann die Aktoreneinrichtung 41 auch die Aktoreneinrichtung 51 aus Fig. 8 ersetzen. In diesem Fall sind die einzelnen Komponenten der Aktoreneinrichtung 41 mit der Steuerungseinrichtung 56 innerhalb des Gehäuses 57 aus Fig. 8 verbunden.

In Fig. 10 ist ein Detail eines sechsten Ausführungsbeispiels der erfindungsgemäßen Vorrichtung dargestellt. Die Klimatisierungseinrichtung 60 aus Fig. 9 ist hier im Detail dargestellt. Die Klimatisierungseinrichtung 60 beinhaltet eine Heizeinrichtung 70, eine Befeuchtungseinrichtung 71 und eine Einrichtung zur Anpassung der Zusammensetzung der Atmosphäre innerhalb des Bienenstocks 72.

Die Heizeinrichtung 70 ist dabei wie bereits beschrieben ausgebildet, um die Atmosphäre innerhalb des Bienenstocks zu beheizen. Alternativ kann statt einer Heizeinrichtung 70 auch eine Heiz-/Kühl-Einrichtung eingesetzt werden, welche ebenfalls geeignet ist, um den Bienenstock zu kühlen. Die Heizeinrichtung 70 kann dabei zusätzlich einen Lüfter beinhalten, welcher die aufgeheizte Atmosphäre in dem Bienenstock verteilt. So kann eine besonders homogene Verteilung der Atmosphäre erreicht werden.

Die Befeuchtungseinrichtung 71 ist dabei ausgebildet, um die Atmosphäre innerhalb des Bienenstocks geregelt durch die Regelungseinrichtung 42 aus Fig. 7 oder 52 aus Fig. 8 auf eine bestimmte Feuchtigkeit einzustellen. Insbesondere eine relative Feuchtigkeit von 20 % bis 40 % hat sich dabei als günstig erwiesen.

Die Einrichtung zur Anpassung der Zusammensetzung der Atmosphäre 72 ist dabei ausgebildet, um eine Sauerstoffkonzentration und/oder eine CO2-Konzentration innerhalb des Bienenstocks geregelt durch die Regelungseinrichtung 42 aus Fig. 7 oder 52 aus Fig. 8 einzustellen. Die Einrichtung 72 zur Anpassung der Zusammensetzung der Atmosphäre greift dabei auf hier nicht dargestellte Mittel zur Bereitstellung der entsprechenden Gase zurück.

Für eine Bekämpfung der Varroa-Milbe innerhalb des Bienenstocks ist es dabei günstig, die Temperatur auf einen Bereich von 40-42 °C einzustellen. Die Regelung erfolgt dabei bevorzugt mit einer Genauigkeit von +/-0,1°C. Diese Temperatur wird von den adulten Bienen und der Brut weitgehend unbeschadet überstanden, während die Varroa-Milben Schaden nehmen. Die Feuchtigkeit und die Gaszusammensetzung innerhalb des Bienenstocks werden dabei bevorzugt optimal auf die Bedürfnisse der Bienen eingestellt, um die Bienen während der Behandlung keinem zusätzlichen Stress auszusetzen. Alternativ kann auch mittels einem eingestellten Feuchtigkeitsbereich oder einer eingestellten Zusammensetzung der Atmosphäre eine zusätzliche Schädigung der Varroa-Milben erreicht werden.

Eine Regelung der Feuchte erfolgt dabei bevorzugt +/- 2% rel. Feuchte.

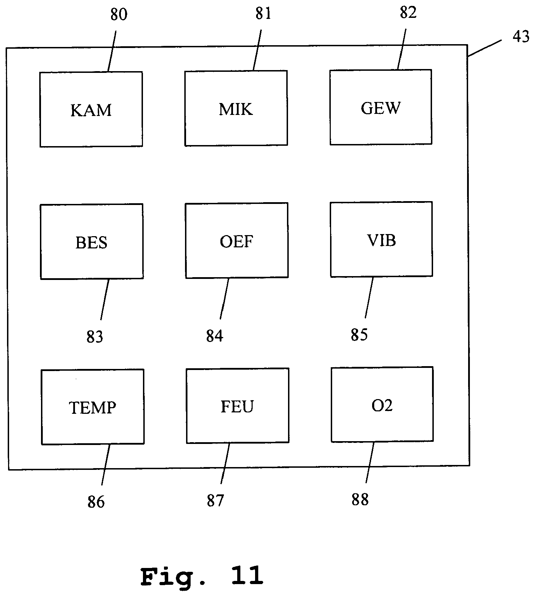

Fig. 11 zeigt ein Detail eines siebten Ausführungsbeispiels der erfindungsgemäßen Vorrichtung. Hier ist der innere Aufbau der Sensoreinrichtung 43 aus Fig. 7 gezeigt. Die Sensoreinrichtung 43, welche der Sensoreinrichtung 53 aus Fig. 8 entspricht, beinhaltet hier eine Kamera 80, welche das Innere des Bienenstocks aufnimmt. Basierend auf den Kamerabildern können Vorhersagen hinsichtlich eines Schwarm-Verhaltens des Bienenvolkes getroffen werden. Auch andere negative Zustände des Bienenvolkes können mittels der Kamera erfasst werden. Die Kamera verfügt dabei entweder über eine Lichtquelle oder ist in der Lage mit sehr geringen Beleuchtungshöhen zu arbeiten.

Bevorzugt weist die Sensoreinrichtung 43 weiterhin eine Kamera auf, welche die Umgebung des Bienenstocks aufnimmt. Mittels dieser Kamera können unbefugte Zugriffe auch den Bienenstock erkannt werden. Alternativ kann auf das Flugverhalten der Bienen basierend auf diesen Kamerabildern geschlossen werden.

Darüber beinhaltet die Sensoreinrichtung 43 ein Mikrofon 81, welches das Innere des Bienenstocks aufnimmt. Anhand der Sensorinformationen dieses Mikrofons 81 kann auf verschiedene problematische Zustände des Bienenvolkes, z.B. ein Brausen geschlossen werden. Alternativ weist der Bienenstock zusätzlich ein Mikrofon auf, welches die Umgebung des Bienenstocks aufnimmt. Auch anhand der Informationen dieses Mikrofons kann auf einen unbefugten Zugriff auf den Bienenstock geschlossen werden. Ebenfalls können Rückschlüsse auf ein Flugverhalten der Bienen getroffen werden.

Drüber hinaus beinhaltet die Sensoreinrichtung einen Gewichtssensor 82, welcher ausgebildet ist, um das Gewicht des Bienenstocks zu messen. Alternativ können mehrere Gewichtssensoren in den einzelnen Zargen eingefügt sein. Basierend auf den Messergebnissen dieser Gewichtssensoren können Rückschlüsse auf den Gesundheitszustand des Bienenvolks und auf eine Honigausbeute getroffen werden.

Weiterhin beinhaltet die Sensoreinrichtung zusätzlich einen Vibrationssensor 85, welcher Vibrationen des Bienenstocks misst. Auch basierend auf den Messergebnissen dieses Sensors können Rückschlüsse auf einen unbefugten Zugriff und auf unerwünschte Zustände des Bienenvolkes getroffen werden.

Darüber hinaus weist die Sensoreinrichtung einen Beschleunigungssensor 83 auf, welcher Beschleunigungen des Bienenstocks misst. Auch die Messergebnisse dieses Sensors können zur Ermittlung von unbefugtem Zugriff genutzt werden.

Weiterhin beinhaltet die Sensoreinrichtung einen Öffnungssensor 84, welcher ein Öffnen des Bienenstocks bestimmt. Auch die Ergebnisse dieses Sensors können zur Ermittlung eines unbefugten Zugriffs genutzt werden.

Die Sensoreinrichtung 43 weist weiterhin einen Temperatursensor 86 zur Messung der Temperatur der Atmosphäre innerhalb des Bienenstocks auf. Alternativ oder zusätzlich kann sie einen Temperatursensor zur Messung der Außentemperatur beinhalten. Die Temperaturmessung ist notwendig, um die Temperatur im Bienenstock regeln zu können. Anhand der Außentemperatur können bestimmte Alarmzustände ermittelt werden. Z.B. kann ein Alarm bei besonders starkem Frost ausgelöst werden.

Darüber hinaus weist die Sensoreinrichtung 43 einen Feuchtigkeitssensor 87 auf, welcher die relative Feuchtigkeit der Atmosphäre innerhalb des Bienenstocks misst. Diese Information ist notwendig, um die relative Feuchtigkeit innerhalb des Bienenstocks regeln zu können.

Weiterhin weist die Sensoreinrichtung 43 einen Sauerstoffsensor 88 auf, welche ausgebildet ist, um eine Sauerstoffkonzentration und/oder eine Kohlenstoffdioxidkonzentration der Atmosphäre innerhalb des Bienenstocks zu messen. Diese Information ist notwendig, um die Zusammensetzung der Atmosphäre zu regeln. Alternativ oder zusätzlich kann die Vorrichtung einen Kohlenstoffdioxidsensor beinhalten.

Sämtliche Messergebnisse der Sensoreinrichtung werden dabei von der Steuereinrichtung 46 bzw. 56 erfasst und verarbeitet. Die verarbeiteten Messergebnisse werden dabei über die Kommunikationseinrichtung 44, 54 an die Kommunikationseinheit 22 aus Fig. 2 übertragen.

In Fig. 12 ist ein Ausführungsbeispiel eines Ausführungsbeispiels des erfindungsgemäßen Verfahrens gezeigt. In einem ersten Schritt 100 wird eine erfindungsgemäße Vorrichtung in einen Bienenstock eingeschoben. Optional werden dabei übrige Öffnungen des Bienenstocks verschlossen. Alternativ ist die Vorrichtung ausgebildet, um selbstständig, wenn nötig, Öffnungen des Bienenstocks zu verschließen.

In einem zweiten Schritt 101 werden Parameter des Bienenstocks gemessen. Solche Parameter sind z.B. die Temperatur der Atmosphäre im Bienenstock, die Feuchtigkeit der Atmosphäre im Bienenstock, der CO2-Gehalt der Atmosphäre im Bienenstock, der Sauerstoffgehalt der Atmosphäre im Bienenstock. Hier wird auf die Ausführungen zur Sensoreinrichtung in Fig. 7 und Fig. 8 verwiesen.

In einem dritten Schritt 102 werden die ermittelten Parameter weiterverarbeitet. Teil der Weiterverarbeitung ist dabei z.B. eine Ermittlung von Alarmzuständen.

In einem vierten Schritt 103 werden die weiterverarbeiteten Parameter übertragen. Der Imker kann die Parameter dann mittels einer Kommunikationseinheit, z.B. einem Mobiltelefon, einem PC, etc. abrufen. Auch eine direkte Alarmierung des Imkers z.B. mittels eines automatischen Anrufs ist denkbar.

In einem optionalen fünften Schritt 104 werden Steuersignale des Imkers empfangen. Basierend auf den Steuersignalen werden entsprechende Aktionen, wie z.B. eine Aufheizung oder eine Medikamentierung oder ein Verschließen des Fluglochs ausgeführt.

In einem sechsten Schritt 105 erfolgt eine geregelte Klimatisierung des Bienenstocks. Dabei wird zumindest eine Heizung und/oder Kühlung des Bienenstocks durchgeführt. Auch eine Befeuchtung oder Trocknung oder Veränderung der Zusammensetzung der Atmosphäre ist bei diesem Schritt möglich. Die ausführlich beschriebene Bekämpfung der Varroa-Milbe erfolgt dabei in diesem Schritt.

Die Erfindung ist dabei nicht auf die dargestellten Ausführungsbeispiele beschränkt. Die gegenwärtige Erfindung ist nicht auf Bienenstöcke mit Zargen beschränkt. Auch ein Einsatz an Bienenkörben ist denkbar. Alle vorstehend beschriebenen Merkmale oder in den Figuren gezeigten Merkmale sind im Rahmen der Erfindung beliebig vorteilhaft miteinander kombinierbar.

## Patentansprüche

1. Vorrichtung (20, 40, 50) zur Bekämpfung von Varroa-Milben in einem Bienenvolk in einem Bienenstock (1), mit einem Gehäuse (20a) mit:
- einer Heizeinrichtung (38, 70) zur Beheizung des Bienenstocks (1),
- einer Sensoreinrichtung (43, 53) mit einem Temperatursensor (86) zur Erfassung einer Temperatur innerhalb des Bienenstocks (1),
- einer Regeleinrichtung (42, 52) zur Regelung der Beheizung basierend auf der erfassten Temperatur,
wobei das Gehäuse (20a) ausgebildet ist, um durch ein Flugloch (15) des Bienenstocks (1) zumindest teilweise in den Bienenstock (1) eingesetzt zu werden
**dadurch gekennzeichnet,**
**dass** die Heizeinrichtung (38, 70) ausgebildet ist, um geregelt durch die Regeleinrichtung (42, 52) eine Atmosphäre innerhalb des Bienenstocks (1) derart zu beheizen, dass das Bienenvolk innerhalb des Bienenstocks (1) homogen eine Temperatur von 40°C - 42°C erreicht,
**dass** das Gehäuse (20a) einen Rahmen (30) aufweist, welcher ausgebildet ist, um in das Flugloch (15) des Bienenstocks (1) eingesetzt zu werden,
**dass** die Heizeinrichtung (38) eine innerhalb des Rahmens angeordnete Heizplatte (38) ist, und
**dass** die Heizplatte (38) parallel zu einem Boden des Bienenstocks (1) innerhalb des Rahmens (30) angeordnet ist.

2. Vorrichtung (20, 40, 50) nach Anspruch 1,
**dadurch gekennzeichnet,**
**dass** der Rahmen (30) ein Gitter (36) beinhaltet, welches zwischen einer untersten Zarge (10) des Bienenstocks (1) und der Heizplatte (38) angeordnet ist,
**dass** das Gitter (36) einen Gitterabstand aufweist, welcher Varroa-Milben hindurchtreten lässt, und Bienen an einem Hindurchtreten hindert, und
**dass** das Gitter (36) mit einem derart großen Abstand zu der Heizplatte (38) angebracht ist, dass auf dem Gitter (36) befindliche Bienen die Heizplatte (38) nicht berühren können.

3. Vorrichtung (20, 40, 50) nach Anspruch 1 oder 2,
**dadurch gekennzeichnet,**
**dass** der Rahmen (30) eine Elektrode (39) zum Abtöten von Varroa-Milben mittels eines Stromschlags beinhaltet, welche die Elektrode (39) berühren, und
**dass** falls der Rahmen (30) ein Gitter (36) beinhaltet, dieses derart angeordnet ist, dass auf dem Gitter (36) befindliche Bienen die Elektrode (39) nicht berühren können.

4. Vorrichtung (20, 40, 50) nach einem der Ansprüche 1 bis 3,
**dadurch gekennzeichnet,**
**dass** die Vorrichtung (20, 40, 50) einen Bodenkorpus (24) aufweist, welcher unterhalb einer untersten Zarge (10) des Bienenstocks (1) angeordnet ist,
**dass** der Bodenkorpus (24) eine Öffnung (25) aufweist, welche an das Flugloch (15) anschließt,
**dass** das Gehäuse (20a) ausgebildet ist, um durch das Flugloch (15) und gleichzeitig durch die Öffnung (25) zumindest teilweise in den Bienenstock (1) eingesetzt zu werden.

5. Vorrichtung (20, 40, 50) nach einem der Ansprüche 1 bis 4,
**dadurch gekennzeichnet,**
**dass** die Sensoreinrichtung (43, 53) einen Feuchtigkeitssensor (87) zur Erfassung einer Feuchtigkeit der Atmosphäre innerhalb des Bienenstocks (1) beinhaltet, und
**dass** die Vorrichtung (20, 40, 50) eine Klimatisierungseinrichtung (60) beinhaltet, welche die Heizeinrichtung (38, 70) und eine Befeuchtungseinrichtung (71) zur von der Regeleinrichtung (42, 52) geregelten homogenen Befeuchtung der Atmosphäre innerhalb des Bienenstocks (1) auf 20 - 40%, bevorzugt von 15 - 30% relative Feuchtigkeit beinhaltet, und/oder
**dass** die Sensoreinrichtung (43, 53) einen Sauerstoffsensor (88) zur Erfassung der Sauerstoffkonzentration und/oder einen Kohlenstoffdioxidsensor zur Erfassung der Kohlenstoffdioxidkonzentration der Atmosphäre innerhalb des Bienenstocks (1) beinhaltet, und
**dass** die Vorrichtung (20, 40, 50) eine Klimatisierungseinrichtung (43, 53) beinhaltet, welche die Heizeinrichtung (38, 70) und eine von der Regeleinrichtung (42, 52) geregelte Einrichtung (72) zur homogenen Anpassung der Zusammensetzung der Atmosphäre innerhalb des Bienenstocks (1) beinhaltet.

6. Vorrichtung (20, 30) nach einem der Ansprüche 1 bis 5, **dadurch gekennzeichnet,**
**dass** die Vorrichtung (20, 40, 50) ausgebildet ist, um das Bienenvolk innerhalb des Bienenstocks (1) während einer Dauer von zumindest 10 Minuten, bevorzugt zumindest 20 Minuten, besonders bevorzugt zumindest 60 Minuten zu heizen und/oder zu befeuchten und/oder um während dieser Dauer die Zusammensetzung der Atmosphäre zu regeln, oder dass die Vorrichtung (20, 40, 50) ausgebildet ist, um die Dauer in Abhängigkeit von Messergebnissen der Sensoreinrichtung (43, 53) zu bestimmen, und/oder dass die Vorrichtung (20, 40, 50) ausgebildet ist, um das gesamte Bienenvolk gleichzeitig zu behandeln, und
**dass** das Bienenvolk adulte Bienen oder adulte Bienen und Brut beinhaltet.

7. Vorrichtung (20, 40, 50) nach einem der Ansprüche 1 bis 6,
**dadurch gekennzeichnet,**
**dass** die Vorrichtung (20, 40, 50) eine Aktoreneinrichtung (41, 51) aufweist,
**dass** die Aktoreneinrichtung (41, 51) die Heizeinrichtung (38, 70) beinhaltet,
**dass** die Aktoreneinrichtung (41, 51) die Klimatisierungseinrichtung (60) beinhaltet, falls die Vorrichtung (20, 40, 50) eine Klimatisierungseinrichtung (60) beinhaltet,
**dass** die Aktoreneinrichtung (41, 51) eine Medikamentierungseinrichtung (61) zum Einführen von Medikamenten in den Bienenstock (1) beinhaltet, und/oder dass die Aktoreneinrichtung (41, 51) eine Fütterungseinrichtung (62) zum Einführen von Futtermitteln in den Bienenstock (1) beinhaltet, und/oder dass die Aktoreneinrichtung (41, 51) eine Öffnungseinrichtung (63) zum Öffnen und/oder Schließen und/oder Verengen und/oder Erweitern von Öffnungen des Bienenstocks (1) aufweist.

8. Vorrichtung (20, 40, 50) nach einem der Ansprüche 1 bis 7,
**dadurch gekennzeichnet,**
**dass** die Sensoreinrichtung (43, 53) zumindest eine Kamera (80) aufweist, welche das Innere des Bienenstocks (1) und/oder die Umgebung des Bienenstocks (1) aufnimmt, und/oder
**dass** die Sensoreinrichtung (43, 53) zumindest ein Mikrofon (81) aufweist welches das Innere des Bienenstocks (1) und/oder die Umgebung des Bienenstocks (1) aufnimmt, und/oder
**dass** die Sensoreinrichtung (43, 53) einen Gewichtssensor (82) beinhaltet, welcher das Gewicht des Bienenstocks (1) oder das Gewicht zumindest einer Zarge (10, 11, 12) misst, und/oder
**dass** die Sensoreinrichtung (43, 53) einen Vibrationssensor (85) beinhaltet, welcher Vibrationen des Bienenstocks (1) misst, und/oder
**dass** die Sensoreinrichtung (43, 53) einen Beschleunigungssensor (83) beinhaltet, welcher Beschleunigungen des Bienenstocks (1) misst, und/oder dass die Sensoreinrichtung (43, 53) einen Öffnungssensor (84) beinhaltet, welcher ein Öffnen des Bienenstocks bestimmt.

9. Vorrichtung (20, 40, 50) nach einem der Ansprüche 1 bis 8,
**dadurch gekennzeichnet,**
**dass** die Vorrichtung (20, 40, 50) Steckplätze (34, 35) für Module (32, 33) aufweist,
**dass** ein Modul (32, 33) zumindest einen Sensor und/oder zumindest einen Aktor beinhaltet,
**dass** die Steckplätze (34, 35) ausgebildet sind, um
- die Module (32, 33) mit Energie versorgen und/oder
- eine Kommunikation mit den Modulen (32, 33) und/oder zwischen den Modulen (32, 33) zu ermöglichen, und
- Sensoren und/oder Aktoren der Module (32, 33) Zugang zu einem Inneren des Bienenstocks (1) zu ermöglichen, und dass die Vorrichtung (20, 40, 50) zumindest ein Modul (32, 33) beinhaltet.

10. Anlage mit zumindest einer Vorrichtung (20, 40, 50) nach einem der Ansprüche 1 bis 9,
**dadurch gekennzeichnet,**
**dass** die Anlage eine Steuereinrichtung (46, 56) zur Steuerung der Heizeinrichtung (70), der Regeleinrichtung (42, 52) und der Sensoreinrichtung (43, 53) beinhaltet, dass die Steuereinrichtung (46, 56) ausgebildet ist, um eine Klimatisierungseinrichtung (60) zu steuern, falls die Vorrichtung (20, 40, 50) eine Klimatisierungseinrichtung (60) beinhaltet,
**dass** die Steuereinrichtung (46, 56) ausgebildet ist, um eine Befeuchtungseinrichtung (71) zu steuern, falls die Vorrichtung (20, 40, 50) eine Befeuchtungseinrichtung (71) beinhaltet,
**dass** die Steuereinrichtung (46, 56) ausgebildet ist, um eine Einrichtung (72) zur homogenen Anpassung der Zusammensetzung der Atmosphäre zu steuern, falls die Vorrichtung (20, 40, 50) eine Einrichtung (72) zur homogenen Anpassung der Zusammensetzung der Atmosphäre beinhaltet,
**dass** die Steuereinrichtung (46, 56) ausgebildet ist, um eine Aktoreneinrichtung (41, 51) zu steuern, falls die Vorrichtung (20, 40, 50) eine Aktoreneinrichtung (41, 51) beinhaltet,
**dass** die Steuereinrichtung (46, 56) ausgebildet ist, um Messergebnisse von der Sensoreinrichtung (43, 53) zu empfangen und zu verarbeiten,
**dass** die Anlage eine Kommunikationseinrichtung (44, 54) beinhaltet, welche ausgebildet ist, um
- verarbeitete Messergebnisse von der Steuereinrichtung (46, 56) zu empfangen und auszusenden, und
- Steuersignale zu empfangen und an die Steuereinrichtung (46, 56) zu übergeben.

11. Anlage nach Anspruch 10,
**dadurch gekennzeichnet,**
**dass** die Steuereinrichtung (46, 56) ausgebildet ist, um
- Alarmzustände basierend auf Messergebnissen der Sensoreinrichtung (43, 53) zu bestimmen, und
- ermittelte Alarmzustände an die Kommunikationseinrichtung (44, 54) zu übergeben, und dass die Kommunikationseinrichtung (44, 54) ausgebildet ist, um die übergebenen Alarmzustände auszusenden.

12. Anlage nach Anspruch 10 oder 11,
**dadurch gekennzeichnet,**
**dass** die Anlage zumindest zwei Vorrichtungen (20, 40, 50) nach einem der Ansprüche 1 bis 7 aufweist, und
**dass** die Steuereinrichtung (46, 56) und die Kommunikationseinrichtung (44, 54) in einem von dem Gehäuse (20a) der Vorrichtung (20, 40, 50) unterschiedlichen Gehäuse angeordnet sind.

13. System mit zumindest einer Anlage nach einem der Ansprüche 10 bis 12,
**dadurch gekennzeichnet,**
**dass** das System eine Kommunikationseinheit (22) beinhaltet, welche ausgebildet ist, um
- mit der Kommunikationseinrichtung (44, 54) zu kommunizieren,
- ausgesendete verarbeitete Messergebnisse von der Steuereinrichtung (46, 56) zu empfangen und anzuzeigen, und
- Steuereingaben eines Nutzers als Steuersignale an die Kommunikationseinrichtung (44, 54) zu senden, und
**dass** die Kommunikationseinheit (22) ein Mobiltelefon oder ein Computer oder ein Laptop oder ein Tablet-Computer ist.

14. Verfahren zur Bekämpfung von Varroa-Milben in einem Bienenvolk in einem Bienenstock (1), mit den folgenden Schritten:
- Erfassung einer Temperatur innerhalb des Bienenstocks (1) mittels einer Sensoreinrichtung (43, 53),
- geregelte Beheizung des Bienenstocks basierend auf der erfassten Temperatur mittels einer Heizeinrichtung (38, 70) und einer Regeleinrichtung (42, 52),
wobei ein Gehäuse (20a), welches die Sensoreinrichtung (43, 53), die Heizeinrichtung (38, 70) und die Regeleinrichtung (42, 52) beinhaltet, durch ein Flugloch (15) des Bienenstocks (1) zumindest teilweise in den Bienenstock (1) eingesetzt wird,
**dadurch gekennzeichnet,**
**dass** eine Atmosphäre innerhalb des Bienenstocks (1) von der Heizeinrichtung (38, 70) derart beheizt wird, dass das Bienenvolk innerhalb des Bienenstocks (1) homogen eine Temperatur von 40°C - 42°C erreicht,
**dass** das Gehäuse (20a) einen Rahmen (30) aufweist, welcher in das Flugloch (15) des Bienenstocks (1) eingesetzt wird, dass die Heizeinrichtung (38) eine innerhalb des Rahmens angeordnete Heizplatte (38) ist, und
**dass** die Heizplatte (38) parallel zu einem Boden des Bienenstocks (1) innerhalb des Rahmens (30) angeordnet ist.

## Claims

1. Device (20, 40, 50) for fighting Varroa mites in a bee colony in a beehive (1), comprising a housing (20a) with:
- a heating unit (38, 70) for heating the beehive (1),
- a sensor unit (43, 53) with a temperature sensor (86) for detecting a temperature within the beehive (1),
- a control unit (42, 52) for controlling the heating based on the detected temperature,
wherein the housing (20a) is configured for being inserted at least partially into the beehive (1) through an entrance (15) of the beehive (1),
**characterized in that**
the heating unit (38, 70) is configured for heating, controlled by the control unit (42, 52), an atmosphere within the beehive (1) so that the bee colony within the beehive homogenously reaches a temperature of 40°C - 42°C, that the housing (20a) comprises a frame (30), which is configured for being inserted into the beehive (1),
that the heating unit (38) is a heating plate (38) arranged in the frame, and
that the heating plate is arranged parallel to a ground of the beehive (1) within the frame (30).

2. Device (20, 40, 50) according to claim 1,
**characterized in that,**
the frame (30) comprises a grate (36), which is arranged between a lowest box of the beehive (1) and the heating plate (38),
that the grate (36) has a spacing, which lets Varroa mites pass, but does not let bees pass, and
that the grate (36) is arranged in a distance from the heating plate (38) that bees on the grate (36) cannot touch the heating plate (38).

3. Device (20, 40, 50) according to claim 1 or 2,
**characterized in that**
the frame (30) comprises an electrode (39) for killing Varroa mites touching the electrode (39), using an electric shock, and
that the if the frame (30) comprises a grid (36), this is arranged so that bees on the grid (36) cannot tough the electrode (39).

4. Device (20, 40, 50) according to any of the claims 1 to 3,
**characterized in that**
the device (20, 40, 50) comprises a ground body (24), which is arranged under a lowest box of the beehive (1), wherein the ground body (24) comprises an opening (25), which is adjoined to the entrance (15),
wherein the housing (20a) is configured for being inserted at least partially into the beehive (1) through the entrance (15) and at the same time through the opening (25).

5. Device (20, 40, 50) according to any of the claims 1 to 4,
**characterized in that**
the sensor unit (43, 53) comprises a humidity sensor (87) for detecting a humidity of the atmosphere within the beehive (1), and
that the device (20, 40, 50) comprises an air conditioning unit, which comprises the heating unit (38, 70) and a moisturizing unit (71) for regulated moisturizing, regulated by the control unit (42, 72), of the atmosphere within the beehive (1) to 20 - 40%, preferably 15 - 30% relative humidity, and/or
that the sensor unit (43, 53) comprises a oxygen sensor (88) for detecting an oxygen concentration and/or a carbon dioxide sensor, for detecting a carbon dioxide concentration within the atmosphere within the beehive (1), and
wherein the device (20, 40, 50) comprises an air conditioning unit )43, 53), which comprises the heating unit (38, 70) and a unit (72) for, controlled by the control unit (42, 52), homogenous adjustment of the composition of the atmosphere within the beehive (1).

6. Device (20, 30) according to any of the claims 1 to 5, **characterized in that**
the device (20, 40, 50) is configured for heating and/or moisturizing the bee colony within the beehive (1) and/or controlling a composition of the atmosphere during a duration of at least 10 minutes, preferably at least 20 minutes, especially preferably at least 60 minutes, or wherein the device (20, 40, 50) is configured for determining the duration dependent upon measurement results of the sensor unit (43, 53), and/or
wherein the device (20, 40, 50) is configured for treating the entire bee colony simultaneously, and
wherein the bee colony comprises adult bees or adult bees and brood.

7. Device (20, 40, 50) according to any of the claims 1 to 6,
**characterized in that**
the device (20, 40, 50) comprises an actuator unit (41, 51),
that the actuator unit (41, 51) comprises the heating unit (38, 70),
that the actuator unit (41, 51) comprises the air conditioning unit (60), if the device (20, 40, 50) comprises an air conditioning unit (60),
that the actuator unit (41, 51) comprises a medication unit (61) for inserting medication into the beehive (1), and/or
that the actuator unit (41, 51) comprises a feeding unit (62) for inserting feedstuff into the beehive (1), and/or that the actuator unit (41, 51) comprises an opening unit (63) for opening and/or closing and/or narrowing and/or widening of openings of the beehive (1).

8. Device (20, 40, 50) according to any of the claims 1 to 7,
**characterized in that**
the sensor unit (43, 53) comprises a camera (80), which records the interior of the beehive (1) and/or the surroundings of the beehive (1), and/or
wherein the sensor unit (43, 53) comprises a microphone (81), which records the interior of the beehive (1) and/or the surroundings of the beehive (1), and/or
wherein the sensor unit (43, 53) comprises a weight sensor (82), which measures the weight of the beehive (1) or the weight of at least one box (10, 11, 12), and/or
wherein the sensor unit (43, 53) comprises a vibration sensor (85), which measures vibrations of the beehive (1), and/or wherein the sensor unit (43, 53) comprises an acceleration sensor (83), which measures accelerations of the beehive (1), and/or
wherein the sensor unit (43, 53) comprises an opening sensor (84), which determines the if beehive (1) is being opened.

9. Device (20, 40, 50) according to any of the claims 1 to 8,
**characterized in that**
the device (20, 40, 50) comprises plug-in slots (34, 35) for modules (32, 33),
that a module (32, 33) comprises at least one sensor and/or at least one actuator,
that the plug-in slots (34, 35) are configured for
- providing the modules (32, 33) with energy, and/or
- facilitating a communication with the modules (32, 33) and/or between the modules (32, 33), and/or
- provide access to the interior of the beehive (1) to the sensors and/or actuators of the modules (32, 33), and that the device (20, 30, 50) comprises at least one module (32, 33).

10. Arrangement comprising at least one device (20, 30, 50) according to any of the claims 1 to 9,
**characterized in that**
the arrangement comprises a controller (46, 56) for controlling the heating unit (70), the control unit (43, 53), and the sensor unit (46, 56),
that the controller (46, 56) is configured for controlling an air conditioning unit (60), if the device (20, 40, 50) comprises an air conditioning unit (60),
that the controller (46, 56) is configured for controlling a moisturizing unit (71), if the device (20, 3, 50) comprises a moisturizing unit (71),
that the controller (46, 56) is configured for controlling a unit (72) for homogenous adjustment of the composition of the atmosphere within the beehive (1), if the device (20, 30, 50) comprises a unit (72) for homogenous adjustment of the composition of the atmosphere within the beehive (1),
that the controller (46, 56) is configured for controlling an actuator unit (41, 51), if the device (20, 30, 50) comprises an actuator unit (41, 51),
that the controller (46, 56) is configured for receiving and processing measuring results of the sensor unit (43, 53),
that the arrangement comprises a communication unit (44, 54), which is configured for
- receiving processed measuring results from the controller (46, 56) and transmitting them, and
- receiving control signals and handing them to the controller (46, 56).

11. Arrangement according to claim 10,
**characterized in that**
the controller (46, 56) is configured for
- determine alarm conditions based on measuring results of the sensor unit (43, 53), and
- hand over determined alarm conditions to the communication unit (44, 54), and
that the communication unit (44, 54) is configured for transmitting the handed over alarm conditions.

12. Arrangement according to claim 10 or 11,
**characterized in that**
the arrangement comprises at least two devices according to any of the claims 1 to 7, and
that the controller (46, 56) and the communication unit (44, 54) are arranged in a housing different from the housing (20a) of the device (20, 30, 50).

13. System comprising at least one arrangement according to any of the claims 10 to 12,
**characterized in that**
the system comprises a communication unit (22), which is configured for
- communicating with the communication unit (44, 54),
- receiving and displaying processed measuring results from the controller (46, 56),
- transmitting control inputs of a user as control signals to the communication unit (44, 54), and
that the communication unit (22) is a mobile telephone of a computer or a laptop or a tablet computer.

14. Method for fighting Varroa mites within a bee colony in a beehive (1), with the following steps:
- determining a temperature within the beehive (1) using a sensor unit (43, 53),
- controlled heating oft he beehive (1) based on the determined temperature using a heating unit (38, 70) and a control unit (42, 52),
wherein a housing, which comprises the sensor unit (43, 53), the heating unit (38, 70) and the control unit (42, 52), is inserted at least partially into the beehive (1) through an entrance of the beehive (1),
**characterized in that**
an atmosphere within the beehive (1) is heated by the heating unit (38, 70) such that the bee colony within the beehive (1) homogenously reaches temperature of 40°C - 42°C,
that the housing (20a) comprises a frame (30), which is inserted into the entrance (15) of the beehive (1),
that the heating unit (38) is a heating plate (38) arranged within the frame (30), and
that the heating plate is arranged parallel to a ground of the beehive (1) within the frame (30).

## Revendications

1. Dispositif (20, 40, 50) pour le contrôle des acariens varroa d'une colonie d'abeilles dans une ruche (1), comportant un boîtier (20a) avec :
- un dispositif de chauffage (38, 70) pour le chauffage de la ruche (1),
- un dispositif de capteur (43, 53) avec un capteur de température (86) pour la détection d'une température à l'intérieur de la ruche (1),
- un dispositif de régulation (42, 52) pour la régulation du chauffage sur la base de la température détectée, le boîtier (20a) étant réalisé pour être mis en place au moins partiellement dans la ruche (1) par une entrée (15) de la ruche (1),
**caractérisé**
**en ce que** le dispositif de chauffage (38, 70) est réalisé pour chauffer, régulé par le dispositif de régulation (42, 52), une atmosphère à l'intérieur de la ruche (1), de manière à obtenir pour la colonie d'abeilles à l'intérieur de la ruche (1) une température homogène comprise entre 40 °C et 42 °C,
**en ce que** le boîtier (20a) présente un cadre (30) prévu pour être mis en place dans l'entrée (15) de la ruche (1),
**en ce que** le dispositif de chauffage (38) est une plaque chauffante (38) disposée à l'intérieur du cadre, et
**en ce que** la plaque chauffante (38) est disposée parallèlement au fond de la ruche (1) à l'intérieur du cadre (30).

2. Dispositif (20, 40, 50) selon la revendication 1,
**caractérisé**
**en ce que** le cadre (30) comprend un treillis (36) disposé entre une hausse inférieure (10) de la ruche (1) et la plaque chauffante (38),
**en ce que** le treillis (36) présente un maillage de treillis laissant passer les acariens varroa, et empêchant le passage des abeilles, et
**en ce que** le treillis (36) est monté avec un espacement à la plaque chauffante (38) tel que les abeilles se trouvant sur le treillis (36) ne peuvent pas toucher la plaque chauffante (38).

3. Dispositif (20, 40, 50) selon la revendication 1 ou 2,
**caractérisé**
**en ce que** le cadre (30) comprend une électrode (39) pour la destruction par décharge électrique des acariens varroa qui touchent l'électrode (39), et
**en ce que**, si le cadre (30) comprend un treillis (36), celui-ci est disposé de telle manière que les abeilles se trouvant sur le treillis (36) ne peuvent pas toucher l'électrode (39).

4. Dispositif (20, 40, 50) selon l'une des revendications 1 à 3,
**caractérisé**
**en ce que** le dispositif (20, 40, 50) présente un corps de fond (24) disposé sous une hausse inférieure (10) de la ruche (1),
**en ce que** le corps de fond (24) présente une ouverture (25) adjacente à l'entrée (15),
**en ce que** le boîtier (20a) est prévu pour être mis en place au moins partiellement dans la ruche (1) par l'entrée (15) et simultanément par l'ouverture (25).

5. Dispositif (20, 40, 50) selon l'une des revendications 1 à 4,
**caractérisé**
**en ce que** le dispositif de capteur (43, 53) comprend un capteur d'humidité (87) pour la détection d'humidité de l'atmosphère à l'intérieur de la ruche (1), et
**en ce que** le dispositif (20, 40, 50) comprend un dispositif de climatisation (60), lequel comprend le dispositif de chauffage (38, 70) et un dispositif d'humidification (71) pour l'humidification homogène régulée par le dispositif de régulation (42, 52) de l'atmosphère à l'intérieur de la ruche (1), entre 20 et 40 %, de préférence entre 15 et 30 % d'humidité relative, et/ou
**en ce que** le dispositif de capteur (43, 53) comprend un capteur d'oxygène (88) pour la détection de la concentration en oxygène et/ou un capteur de dioxyde de carbone pour la détection de la concentration en dioxyde de carbone de l'atmosphère à l'intérieur de la ruche (1), et
**en ce que** le dispositif (20, 40, 50) comprend un dispositif de climatisation (43, 53), lequel comprend le dispositif de chauffage (38, 70) et un dispositif (72) régulé par le dispositif de régulation (42, 52) pour l'ajustement homogène de la composition de l'atmosphère à l'intérieur de la ruche (1).

6. Dispositif (20, 30) selon l'une des revendications 1 à 5,
**caractérisé**
**en ce que** le dispositif (20, 40, 50) est prévu pour chauffer et/ou pour humidifier la colonie d'abeilles à l'intérieur de la ruche (1) pendant une durée d'au moins 10 minutes, de préférence d'au moins 20 minutes, de manière particulièrement préférée d'au moins 60 minutes et/ou pour réguler la composition de l'atmosphère pendant cette durée, ou en ce que le dispositif (20, 40, 50) est prévu pour déterminer la durée en fonction de résultats de mesure du dispositif de capteur (43, 53), et/ou
**en ce que** le dispositif (20, 40, 50) est prévu pour traiter simultanément toute la colonie d'abeilles, et
**en ce que** la colonie d'abeilles comprend des abeilles adultes ou des abeilles adultes et du couvain.

7. Dispositif (20, 40, 50) selon l'une des revendications 1 à 6,
**caractérisé**
**en ce que** le dispositif (20, 40, 50) comprend un dispositif d'actionneur (41, 51),
**en ce que** le dispositif d'actionneur (41, 51) comprend le dispositif de chauffage (38, 70),
**en ce que** le dispositif d'actionneur (41, 51) comprend le dispositif de climatisation (60) si le dispositif (20, 40, 50) comprend un dispositif de climatisation (60),
**en ce que** le dispositif d'actionneur (41, 51) comprend un dispositif de médication (61) pour l'introduction de médicaments dans la ruche (1), et/ou
**en ce que** le dispositif d'actionneur (41, 51) comprend un dispositif de nourrissage (62) pour l'introduction d'aliments dans la ruche (1), et/ou en ce que le dispositif d'actionneur (41, 51) comprend un dispositif d'ouverture (63) pour l'ouverture et/ou la fermeture et/ou le rétrécissement et/ou l'élargissement d'ouvertures de la ruche (1).

8. Dispositif (20, 40, 50) selon l'une des revendications 1 à 7,
**caractérisé**
**en ce que** le dispositif de capteur (43, 53) comprend au moins une caméra (80) enregistrant l'intérieur de la ruche (1) et/ou l'environnement de la ruche (1), et/ou
**en ce que** le dispositif de capteur (43, 53) comprend au moins un microphone (81) enregistrant l'intérieur de la ruche (1) et/ou l'environnement de la ruche (1), et/ou
**en ce que** le dispositif de capteur (43, 53) comprend un capteur de poids (82) mesurant le poids de la ruche (1) ou le poids d'au moins une hausse (10, 11, 12), et/ou
**en ce que** le dispositif de capteur (43, 53) comprend un capteur de vibrations (85) mesurant des vibrations de la ruche (1), et/ou
**en ce que** le dispositif de capteur (43, 53) comprend un capteur d'accélération (83) mesurant des accélérations de la ruche (1), et/ou en ce que le dispositif de capteur (43, 53) comprend un capteur d'ouverture (84) déterminant une ouverture de la ruche.

9. Dispositif (20, 40, 50) selon l'une des revendications 1 à 8,
**caractérisé**
**en ce que** le dispositif (20, 40, 50) présente des ports (34, 35) pour des modules (32, 33),
**en ce qu'**un module (32, 33) comprend au moins un capteur et/ou au moins un actionneur,
**en ce que** les ports (34, 35) sont prévus pour
- alimenter les modules (32, 33) en courant et/ou
- permettre une communication avec les modules (32, 33) et/ou entre les modules (32, 33), et
- permettre l'accès à l'intérieur de la ruche (1) à des capteurs et/ou à des actionneurs des modules (32, 33), et
**en ce que** le dispositif (20, 40, 50) comprend au moins un module (32, 33).

10. Installation avec au moins un dispositif (20, 40, 50) selon l'une des revendications 1 à 9,
**caractérisée**
**en ce que** l'installation comprend un dispositif de commande (46, 56) pour la commande du dispositif de chauffage (70), du dispositif de régulation (42, 52) et du dispositif de capteur (43, 53),
**en ce que** le dispositif de commande (46, 56) est prévu pour commander un dispositif de climatisation (60) si le dispositif (20, 40, 50) comprend un dispositif de climatisation (60),
**en ce que** le dispositif de commande (46, 56) est prévu pour commander un dispositif d'humidification (71) si le dispositif (20, 40, 50) comprend un dispositif d'humidification (71),
**en ce que** le dispositif de commande (46, 56) est prévu pour commander un dispositif (72) pour l'ajustement homogène de la composition de l'atmosphère si le dispositif (20, 40, 50) comprend un dispositif (72) pour l'ajustement homogène de la composition de l'atmosphère,
**en ce que** le dispositif de commande (46, 56) est prévu pour commander un dispositif d'actionneur (41, 51) si le dispositif (20, 40, 50) comprend un dispositif d'actionneur (41, 51),
**en ce que** le dispositif de commande (46, 56) est prévu pour recevoir et traiter des résultats de mesure du dispositif de capteur (43, 53),
**en ce que** l'installation comprend un dispositif de communication (44, 54) prévu pour
- recevoir et transmettre des résultats de mesure traités par le dispositif de commande (46, 56), et
- recevoir des signaux de commande et les transmettre au dispositif de commande (46, 56).

11. Installation selon la revendication 10,
**caractérisée**
**en ce que** le dispositif de commande (46, 56) est prévu pour
- déterminer des états d'alarme sur la base de résultats de mesure du dispositif de capteur (43, 53), et
- transmettre au dispositif de communication (44, 54) les états d'alarme déterminés, et
**en ce que** le dispositif de communication (44, 54) est prévu pour diffuser les états d'alarme transmis.

12. Installation selon la revendication 10 ou 11,
**caractérisée**
**en ce que** l'installation comprend au moins deux dispositifs (20, 40, 50) selon l'une des revendications 1 à 7, et
**en ce que** le dispositif de commande (46, 56) et le dispositif de communication (44, 54) sont disposés dans un boîtier différent du boîtier (20a) du dispositif (20, 40, 50).

13. Système avec au moins une installation selon l'une des revendications 10 à 12,
**caractérisé**
**en ce que** le système comprend une unité de communication (22) prévue pour
- communiquer avec le dispositif de communication (44, 54),
- recevoir et afficher les résultats de mesure traités transmis par le dispositif de commande (46, 56), et
- transmettre les entrées de commande d'un utilisateur en tant que signaux de commande au dispositif de communication (44, 54), et
**en ce que** l'unité de communication (22) est un téléphone mobile, un ordinateur fixe, un ordinateur portable ou une tablette.

14. Procédé pour le contrôle des acariens varroa d'une colonie d'abeilles dans une ruche (1), comprenant les étapes suivantes :
- la détection d'une température à l'intérieur de la ruche (1) au moyen d'un dispositif de capteur (43, 53),
- le chauffage régulé de la ruche sur la base de la température détectée au moyen d'un dispositif de chauffage (38, 70) et d'un dispositif de régulation (42, 52),
dans lequel un boîtier (20a) comprenant le dispositif de capteur (43, 53), le dispositif de chauffage (38, 70) et le dispositif de régulation (42, 52) est mis en place au moins partiellement dans la ruche (1) par une entrée (15) de la ruche (1),
**caractérisé**
**en ce qu'**une atmosphère à l'intérieur de la ruche (1) est chauffée par le dispositif de chauffage (38, 70) de manière à obtenir pour la colonie d'abeilles à l'intérieur de la ruche (1) une température homogène comprise entre 40 °C et 42 °C,
**en ce que** le boîtier (20a) présente un cadre (30) mis en place dans l'entrée (15) de la ruche (1),
**en ce que** le dispositif de chauffage (38) est une plaque chauffante (38) disposée à l'intérieur du cadre, et
**en ce que** la plaque chauffante (38) est disposée parallèlement au fond de la ruche (1) à l'intérieur du cadre (30).
